# EUROPÄISCHE PATENTSCHRIFT

(11) **EP 4 072 894 B1**
(45) Veröffentlichungstag und Bekanntmachung des Hinweises auf die Patenterteilung: **28.08.2024**
(21) Anmeldenummer: 21703835.5
(22) Anmeldetag: 18.01.2021
(51) Int. Cl.: B60L 7/22, B61H 11/00, B61H 9/00, H05K 7/20, H05B 3/44, H01C 1/08, H01C 1/014, B60T 13/74, B60T 17/22, B61H 7/08, F16D 63/00

(54) **BREMSWIDERSTAND UND DAMIT AUSGESTATTETES FAHRZEUG**
BRAKING RESISTOR AND VEHICLE EQUIPPED WITH SAME
RÉSISTANCE DE FREINAGE ET VÉHICULE ÉQUIPÉ DE CETTE DERNIÈRE

(30) Priorität: 14.02.2020 DE 102020201842
(43) Veröffentlichungstag der Anmeldung: 19.10.2022
(73) Patentinhaber: Siemens Mobility GmbH, 81739 München (DE)
(72) Erfinder: BLISSE, Johannes, 91080 Spardorf (DE); DORNBERGER, Peter, 90489 Nürnberg (DE)
(74) Vertreter: Siemens Patent Attorneys
(86) Internationale Anmeldenummer: PCT/EP2021/050948
(87) Internationale Veröffentlichungsnummer: WO 2021/160376

(56) Entgegenhaltungen:
- WO-A1-2020/083620
- CN-U- 201 465 686
- CN-U- 203 673 902
- CN-U- 204 332 560
- CN-U- 204 332 567
- CN-U- 204 537 787
- CN-U- 206 947 072
- CN-U- 207 367 709
- CN-U- 208 173 317
- CN-U- 208 315 302
- DE-A1- 102018 105 557
- JP-A- H01 307 201
- RU-C2- 2 195 034

## Beschreibung

Die Erfindung bezieht sich auf einen Bremswiderstand für ein mit einer elektrodynamischen Bremseinrichtung ausgestattetes Fahrzeug, insbesondere Schienenfahrzeug, sowie auf ein Fahrzeug, das mit einem solchen Bremswiderstand ausgerüstet ist. Ein bekannter Bremswiderstand geht beispielsweise aus der DE 10 2017 207 274 B3 hervor. Der dort beschriebene Bremswiderstand ist an einem Schienenfahrzeug eingesetzt, in dessen Dachbereich untergebracht und wird dauerhaft von Fahrtwind umströmt, um den Bremswiderstand abzukühlen. Hintergrund dessen ist es, dass im Bremsfall der Bremswiderstand mit Strom aus der elektrodynamischen Bremse des Fahrzeugs beaufschlagt wird. Dieser Strom führt zur Erwärmung des Bremswiderstands, so dass eine nachfolgende Entwärmung erforderlich ist. Auch CN208315302U offenbart einen Bremswiderstand für ein mit einer elektrodynamischen Bremseinrichtung ausgestattetes Fahrzeug.

Bei der Entwärmung durch Fahrtwind ergibt sich das Problem, dass nicht alle Oberflächen des Bremswiderstandes im selben Maße abgekühlt werden, da manche Oberflächenabschnitte des Bremswiderstandes für den kühlenden Fahrtwind leichter zugänglich sind als andere. Dies kann thermisch verursachte Verformungen/Bewegungen des Bremswiderstands nach sich ziehen.

Ausgehend hiervon liegt der Erfindung die Aufgabe zugrunde, den Bremswiderstand der eingangs genannten Art derart weiterzuentwickeln, dass er auch bei über den Bremswiderstand variierenden thermischen Bedingungen sicher einsetzbar ist.

Diese Aufgabe wird gelöst durch einen Bremswiderstand mit den Merkmalen des Anspruchs 1 sowie durch ein Fahrzeug nach Anspruch 8.

Danach ist hinsichtlich des Bremswiderstandes für ein mit einer elektrodynamischen Bremseinrichtung ausgestattetes Fahrzeug vorgesehen, dass der Bremswiderstand eine Mehrzahl von langgestreckten, zylinderförmigen und parallel zueinander auf wenigstens zwei Auflager-Trägerabschnitten eines Auflager-Trägers angeordneten Heizpatronen aufweist, wobei die Heizpatronen mittels einer Lageranordnung gehalten sind, die Festlager umfasst, welche die Heizpatronen in Richtung auf die Auflager-Trägerabschnitte vorspannen.

Aufgrund der von den Festlagern auf die Heizpatronen ausgeübten Vorspannung wird erreicht, dass die Heizpatronen auch im Fall sich über den Bremswiderstand (z. B. zum Fahrzeug gerichtete Seite / nach außen gerichtete Seite) ändernder thermischer Randbedingungen sich nicht in ihrer Längsrichtung verschieben. Zudem wird auch ein Tordieren der Heizpatronen vermieden, was den Nachteil hätte, dass vorgesehene elektrische Anschlüsse der Heizpatronen mechanischen Beanspruchungen ausgesetzt werden, was insbesondere auch zu deren Zerstörung führen kann.

Die Heizpatronen weisen bevorzugt einen äußeren Metallmantel auf, welcher mit einem verdichteten Keramikpulver und einem innerhalb des Keramikpulvers längs der zugeordneten Heizpatrone verlaufenden Heizdraht befüllt ist, wobei an Enden der Heizpatronen jeweils elektrische Anschlüsse für den Heizdraht angebracht sind.

Solche Heizpatronen sind mit Hilfe der Festlager, wie oben erläutert, beispielsweise im Dachbereich eines Fahrzeugs, insbesondere Schienenfahrzeugs, montiert.

Die Festlager weisen jeweils eine Festlager-Trägerabschnitt, der entlang einer der Heizpatronen verläuft, eines ggf. mehrteiligen Festlagerträgers und eine Festlager-Haltelasche, die elastisch gegen den Festlager-Trägerabschnitte befestigt ist, auf. Daraus ergibt sich eine geeignete Befestigung der Heizpatrone mit Hilfe des Festlagers.

Vorteilhafter Weise können die Festlager-Haltelaschen jeweils einen der Heizpatrone zugeordneten bogenförmigen Abschnitt sowie einen dem bogenförmigen Abschnitt gegenüberliegenden Bodenabschnitt aufweisen, welcher wenigstens eine Durchgangsbohrung für eine Spannhülse aufweist, in der eine mit einem Gewinde im Festlager-Trägerabschnitt in Eingriff zu bringende Schraube geführt ist, wobei der Bodenabschnitt der Festlager-Haltelatsche mittels wenigstens einer Feder gegen den Festlager-Trägerabschnitt vorgespannt ist.

Die Festlager-Haltelaschen sind bevorzugt dünnwandig ausgebildet, so dass sie über eine geeignete Biegsamkeit verfügen. Dies hat den Vorteil, dass auch Heizpatronen unterschiedlichen Durchmessers mit Hilfe der Festlager ohne deren bauliche Änderung fixiert werden können. Zudem ermöglicht die Dünnwandigkeit der Festlager-Haltelaschen, dass sie lediglich einen geringen Strömungswiderstand mit sich bringen, wenn der Bremswiderstand insgesamt im Dachbereich des Fahrzeugs untergebracht und unmittelbar von Fahrtwind umströmt ist. Des Weiteren unterstützt die Dünnwandigkeit der Festlager-Haltelaschen auch ein ausreichendes Abführen von Wärme, mit der die Heizpatronen beaufschlagt sind, so dass insbesondere ein Wärmestau an der Lagerstelle wirksam verhindert wird.

Das Material der Festlager-Haltelaschen ist bevorzugt ein hochtemperaturfester und korrosionsfester Werkstoff, welcher zum Mantelmaterial der Heizpatrone (z.B. hochtemperaturfester, hochlegierter Edelstahl) elektrochemisch neutral ist. Hierzu gehören hochtemperaturfeste hochlegierte Stähle und Nickelbasislegierungen. Die Festlager-Haltlaschen haben typischer Weise Abmessungen von jeweils einigen Zentimetern in den drei Raumrichtungen, beispielsweise sind sie ca. 40mm lang, ca. 30mm breit und ca. 65mm hoch.

Bevorzugt sind die Auflager-Trägerabschnitte senkrecht zu den Heizpatronen und den Festlager-Trägerabschnitten angeordnet. In dieser Weise lässt sich eine geeignete Verspannung der Heizpatronen zwischen den Auflager- und Festlager-Trägerabschnitten herbeiführen. Es kann ausreichen, dass lediglich zwei Auflager-Trägerabschnitte vorgesehen sind, die jeweils stirnseitig der Festlager-Trägerabschnitte angeordnet sind. In diesem Ausführungsbeispiel grenzen somit Auflager- und Festlager-Trägerabschnitte unmittelbar aneinander, so dass die beabsichtigte Lagerung platzsparend ausgelegt ist. Bevorzugt ist der Festlager-Träger in einen zentralen Aufnahmeraum des Auflager-Trägers eingesetzt und mit diesem verspannt. Dadurch, dass die Verschraubung des Festlager-Trägers mit dem Aufnahme-Träger an äußeren Rändern der jeweiligen Träger angeordnet ist, kann diese von oben betätigt werden, ohne den Bremswiderstand demontieren zu müssen, Dies ist insbesondere bei einem Austausch einer Heizpatrone vorteilhaft, da der Aufwand für die Demontage des gesamten Bremswiderstands wesentlich größer wäre. Die Anordnung des Festlager-Trägers zwischen den Auflagern bringt den Vorteil mit sich, dass diese Anordnung auf die Heizpatrone weitestgehend drehmomentneutral ist, da die vom Festlager auf die Heizpatrone aufgebrachte, nach unten gerichtete Kraft beidseitig durch die von den Auflagern nach oben gerichteten Kräfte Kompensiert wird.

Vorteilhafter Weise umfassen die Festlager jeweils Dämmplatten, die zwischen dem Festlager-Trägerabschnitt und der Heizpatrone angeordnet sind. Dies bewirkt einen thermischen Schutz insbesondere der Federn gegenüber den Heizpatronen, wenn diese aufgrund eines Stromdurchflusses sehr stark erwärmt sind.

Hinsichtlich des Fahrzeugs wird die oben angegebene Aufgabe gelöst durch ein Fahrzeug nach Anspruch 8. Dieses Fahrzeug ist insbesondere als Schienenfahrzeug ausgebildet. In letzterem Anwendungsfall ist der Bremswiderstand im Dachbereich des Fahrzeugs untergebracht und montiert. Der Bremswiderstand kann von einem Dach des Fahrzeugs nach oben vorstehen, so dass eine thermische Wechselwirkung zwischen dem Bremswiderstand und Fahrtwind ermöglicht ist.

Eine Entwärmung des Bremswiderstands, wie sie bei Vorliegen eines Bremsvorgangs erforderlich ist, erfolgt mit Hilfe von Fahrtwind, der unmittelbar mit den Oberflächen der Heizpatronen des Bremswiderstandes wechselwirkt. Dabei ist hervorzuheben, dass die Art der Lagerung der Heizpatronen, wie sie oben beschrieben ist, auch etwaige thermische Unterschiede zwischen nach außen und nach innen liegenden Oberflächen der Heizpatronen ausgleichen kann. Dazu kann es vorteilhaft sein, wenn die betreffenden Festlager (u. a.) im mittleren Bereich der Heizpatronen angeordnet sind, und zwar betrachtet in Längsrichtung der Heizpatronen.

Ein Ausführungsbeispiel der Erfindung wird nachfolgend unter Bezugnahme auf die Zeichnung noch näher erläutert. Es zeigen:
- Figur 1: eine Seitenansicht einer Heizpatrone zum Einsatz bei einem Bremswiderstand,
- Figur 2: eine Querschnittsansicht der Heizpatrone von Figur 1,
- Figur 3: eine perspektivische Ansicht einer Lageranordnung für Heizpatronen nach Figur 1,
- Figur 4: eine Querschnittsansicht der Lageranordnung von Figur 3,
- Figur 5: eine Querschnittsansicht eines Abschnitts der Lageranordnung von Figur 3 mit eingebauter Heizpatrone,
- Figur 6: eine perspektivische Ansicht einer Festlager-Haltelasche der Lageranordnung von Figur 3,
- Figur 7: eine perspektivische Ansicht eines Auflager-Trägers der Lageranordnung von Figur 3,
- Figur 8: eine perspektivische Ansicht eines Festlager-Trägers mit Festlager-Haltelaschen der Lageranordnung von Figur 3 und
- Figur 9: eine perspektivische Ansicht eines Bremswiderstands, ausgestattet mit Heizpatronen nach Figur 1, mit abgenommener Verkleidung.

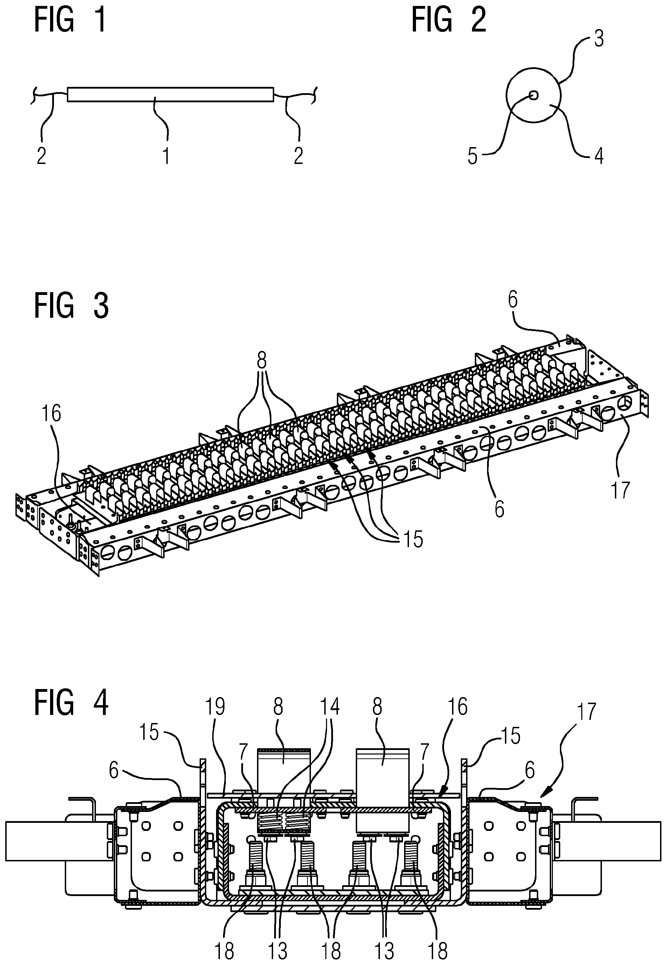

Ein wesentliches Element des hier beschriebenen Bremswidersandes für ein mit einer elektrodynamischen Bremseinrichtung ausgestattetes Fahrzeug, insbesondere Schienenfahrzeug, ist in den Figuren 1 und 2 dargestellt. Dabei handelt es sich um eine Heizpatrone 1, die eine langgestreckte, zylinder- oder auch stabförmige äußere Form aufweist. Die Heizpatrone 1 ist an ihren beiden Stirnseiten jeweils mit elektrischen Anschlüssen 2 ausgestattet. Wie aus Figur 2 hervorgeht, besitzt die Heizpatrone 1 einen äußeren Metallmantel 3, der mit einem hochverdichteten Keramikpulver 4 und einem hochtemperaturbeständigen Heizdraht 5 befüllt ist, wobei der Heizdraht 5 in der Heizpatrone 1 zentral angeordnet ist.

Eine Mehrzahl, parallel zueinander angeordneter Heizpatronen 1 bildet einen Bremswiderstand aus, wobei im Bremsfall die Heizpatronen 1 mit Strom aus der elektrischen Bremse eines Fahrzeugs beaufschlagt werden. Dieser elektrische Strom führt zu einer Erwärmung der Heizpatronen 1. Die Heizpatronen 1 werden während dessen durch den Fahrtwind abgekühlt. Da die Wärmeabfuhr an der direkt umströmten Oberfläche der Heizpatrone 1 größer ist als an anderen Oberflächen der Heizpatrone 1, kühlt diese an der direkt umströmten Oberfläche beschleunigt ab und die Temperatur variiert zwischen Röhrenober- und -unterseite. Anhand der unterschiedlichen thermischen Dehnung der Heizpatronenoberfläche besteht die Gefahr, dass diese sich deformiert (durchbiegt) oder auch verdreht.

Um diese Effekte zu vermeiden, wird eine Lageranordnung nach den Figuren 3 bis 8 eingesetzt. Die Lageranordnung umfasst zwei parallel zueinander verlaufende Auflager-Trägerabschnitte 6 mit daran befestigten Auflagern 15, auf denen die Heizpatronen 1 (vgl. Figur 4) aufliegen. Zudem umfasst die Lageranordnung Festlager-Trägerabschnitte 7, wobei jeder Heizpatrone 1 ein Festlager-Trägerabschnitt 7 zugeordnet ist und die jeweiligen Festlager-Trägerabschnitte 7 unterhalb ihrer zugeordneten Heizpatrone 1 verlaufen, so dass eine jeweilige Heizpatrone 1 und ein zugehöriger Festlager-Trägerabschnitt 7 parallel zueinander angeordnet sind, und zwar über einen geeigneten Längenabschnitt der Heizpatrone 1. Dabei sind die Auflager-Trägerabschnitte 6 senkrecht zu den Festlager-Trägerabschnitten 7 / Heizpatronen 1 angeordnet, insbesondere den Stirnseiten der Festlager-Trägerabschnitte 7 benachbart.

Wesentliches Element der Lageranordnung sind Festlager-Haltelaschen 8, mit deren Hilfe die Heizpatronen 1 mit einer geeigneten Vorspannkraft beaufschlagt werden, die in Richtung auf die Auflager 15 / Auflager-Trägerabschnitte 6 wirkt.

Wie aus Figur 4 hervorgeht, ist jeder Heizpatrone 1 eine Festlager-Haltelasche 8 zugeordnet, wobei die einzelnen Festlager-Haltelaschen 8 von Heizpatrone 1 zu Heizpatrone 1 in Längsrichtung der Heizpatronen 1 zueinander versetzt angeordnet sind.

Figur 4 zeigt außerdem, dass die Festlager-Trägerabschnitte 7 plattenförmig ausgebildet sind. Es ist ersichtlich, dass ein mehrteiliger Festlager-Träger 16, der die Festlager-Trägerabschnitte 7 umfasst, einen im Wesentlichen rechtwinkeligen Querschnitt aufweist und in einen ebenfalls mehrteiligen Auflager-Träger 17 eingesetzt ist. Dabei ist der Festlager-Träger 16 mit dem Auflager-Träger 17 mittels Schrauben 18 verspannt.

Zudem ist gezeigt, dass zum Schutz von thermischer Beschädigung, insbesondere der Federn 14, oberhalb der Festlager-Trägerabschnitte 7 und unterhalb einer in die Festlager-Haltelaschen 8 einzusetzenden Heizpatrone 1 Dämmplatten 19 vorgesehen sind.

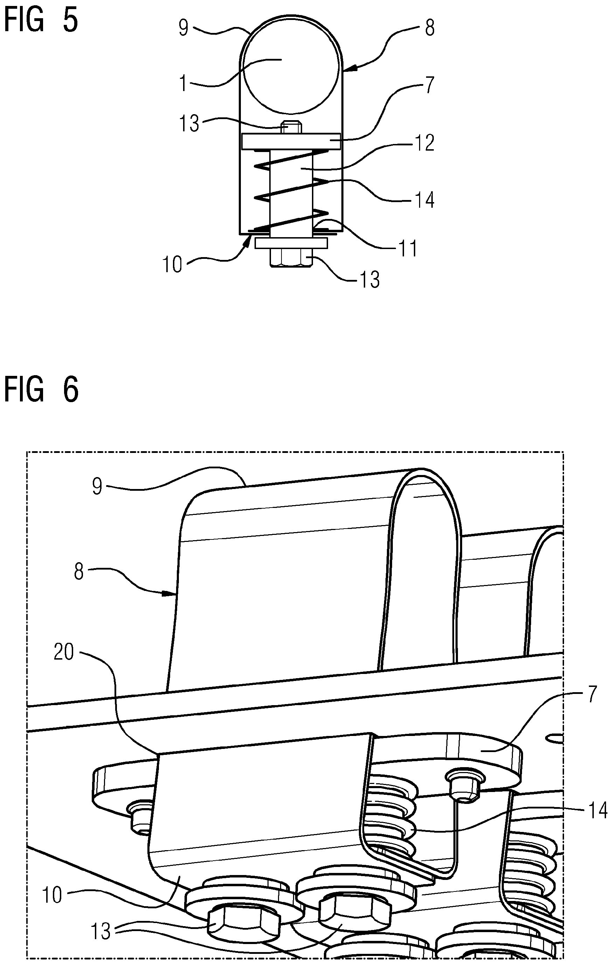

Wie in Figur 5 veranschaulicht ist, ist eine jeweilige, umfänglich geschlossene Festlager-Haltelasche 8 elastisch gegen den zugehörigen Festlager-Trägerabschnitt 7 befestigt. Die Festlager-Haltelasche 8 zeigt einen der Heizpatrone 1 zugeordneten bogenförmigen Abschnitt 9, der die Heizpatrone 1 umfasst, sowie einen dem bogenförmigen Abschnitt 9 gegenüberliegenden Bodenabschnitt 10, welcher wenigstens eine Durchgangsbohrung 11 für eine Spannhülse 12 aufweist, in der eine mit einem Gewinde im Festlager-Trägerabschnitte 7 in Eingriff zu bringende Schraube 13 geführt ist. Dabei ist eine Feder 14 zwischen einer der Heizpatrone 1 abgewandten Seite des Festlager-Trägerabschnittes 7 (Unterseite) und dem Bodenabschnitt 10 angeordnet, so dass die Feder 14 die Festlager-Haltelasche 8 vorspannt. Eine Betätigung der Schraube 13 (Verdrehen) gestattet es, eine gewünschte Vorspannkraft für die Festlager-Haltelasche 8 einzustellen, die auf die Heizpatrone 1 wirken soll. Auch ist es möglich, mit derselben Festlager-Haltelasche 8 andere Heizpatronen mit abweichendem Radius zu fixieren. Im Ergebnis ist jede Heizpatrone 1 zwischen den Festlager-Haltelaschen 8 und den Auflagern 15 / Auflager-Trägerabschnitten 6 derart verspannt, dass beispielsweise ein Tordieren der Heizpatrone 1 wie auch eine Verschiebung der Heizpatronen 1 in deren Längsrichtung wirksam vermieden werden. Dies hat insbesondere zur Folge, dass die elektrischen Anschlüsse 2 der Heizpatrone 1 vor mechanischer Beanspruchung geschützt sind.

Aus Figur 6 geht eine der Festlager-Haltelaschen 8 mehr im Detail hervor. Bei diesem Ausführungsbeispiel sind zwei Durchgangsbohrungen 11 vorgesehen, so dass eine Vorspannung der Heizpatrone 1 bei dieser Festlager-Haltelasche 8 mit zwei Schraubenfedern 14 erfolgt. Die Festlager-Haltelasche 8 kann als Blechbiegeteil vorliegen, wobei der Bodenabschnitt 10 aus zwei übereinanderliegenden Endabschnitten eines Blechstreifens gebildet ist.

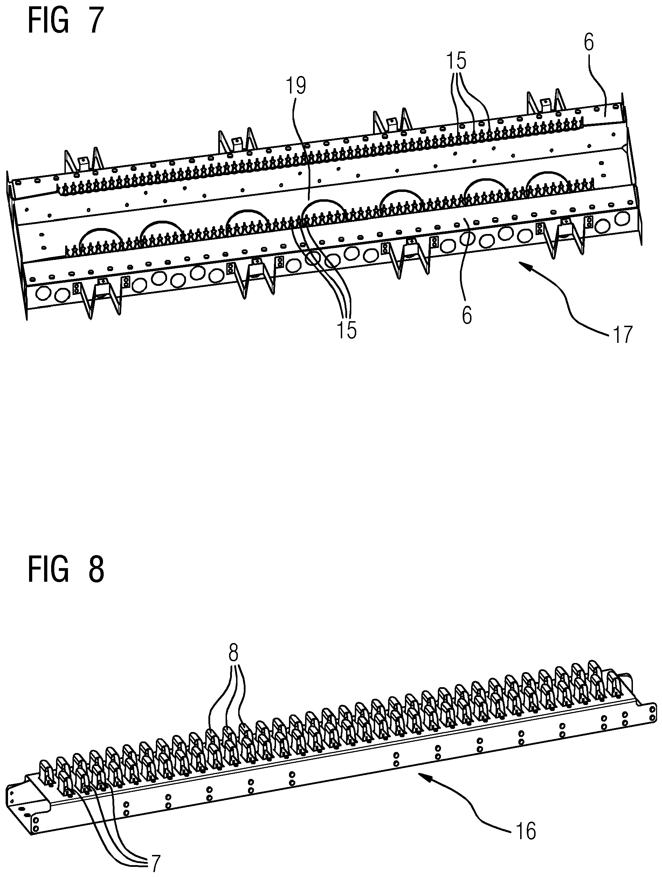

Figur 7 zeigt den Auflager-Träger 17, der die einzelnen Auflager 15 für die Heizpatronen 1 trägt. Der Auflager-Träger 17 ist langgestreckt ausgebildet und weist zwischen den Auflager-Trägerabschnitten 6 einen zentralen Aufnahmeraum 19 auf, in den der Festlager-Träger 16, (vgl. Figur 8) einsetzbar ist. Aus Figur 6 geht ergänzend hervor, dass der Festlager-Träger 16 an seiner Oberseite für jede der Festlager-Haltelaschen 8 eine geeignete Ausnehmung 20 aufweist, in deren Bereich jeweils einer der plattenförmigen Festlager-Trägerabschnitte 7 angeordnet ist.

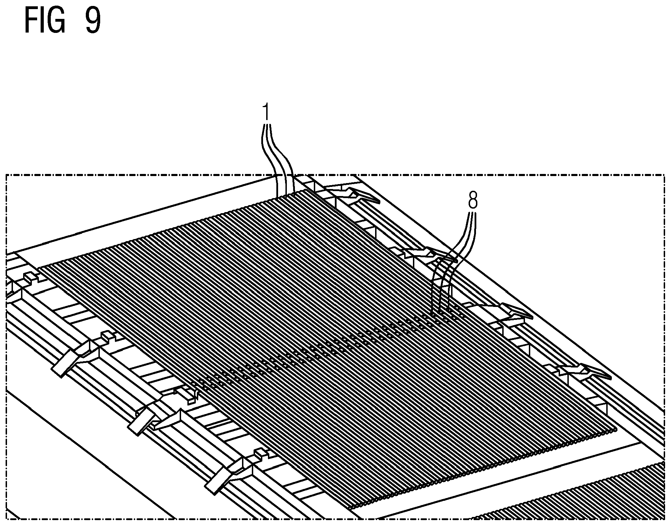

Figur 9 zeigt einen Bremswiderstand, der mit einer Vielzahl von Heizpatronen 1 ausgestattet und auf einem Dach eines Schienenfahrzeugs montiert ist. Im dargestellten Ausführungsbeispiel finden sich die Auflager-Trägerabschnitte 6 und Festlager-Trägerabschnitte 7 im mittleren Längenbereich der Heizpatronen 1. An außermittig gelegenen Lagerstellen der Heizpatronen 1 können zusätzlich Loslager vorgesehen sein.

## Patentansprüche

1. Bremswiderstand für ein mit einer elektrodynamischen Bremseinrichtung ausgestattetes Fahrzeug, wobei der Bremswiderstand eine Mehrzahl von langgestreckten, zylinderförmigen und parallel zueinander auf wenigstens zwei Auflager-Trägerabschnitten (6) eines Auflager-Trägers (17) abgestützten Heizpatronen (1) aufweist, wobei die Heizpatronen (1) mittels einer Lageranordnung gehalten sind, die Festlager umfasst, welche die Heizpatronen (1) in Richtung auf die Auflager-Trägerabschnitte (6) vorspannen, **dadurch gekennzeichnet, dass** die Festlager jeweils einen Festlager-Trägerabschnitt (7), der entlang einer der Heizpatronen (1) verläuft, eines Festlager-Trägers (16) und eine Festlager-Haltelasche (8), die elastisch gegen den Festlager-Trägerabschnitt (7) befestigt ist, aufweisen.

2. Bremswiderstand nach Anspruch 1, **dadurch gekennzeichnet, dass** die Heizpatronen (1) einen äußeren Metallmantel (3) aufweisen, welcher mit einem verdichteten Keramikpulver (4) und einem innerhalb des Keramikpulvers (4) längs der zugeordneten Heizpatrone (1) verlaufenden Heizdraht (5) befüllt ist, wobei an Enden der Heizpatronen (1) jeweils elektrische Anschlüsse (2) für den Heizdraht (5) angebracht sind.

3. Bremswiderstand nach Anspruch 1, **dadurch gekennzeichnet, dass** die Festlager-Haltelaschen (8) jeweils einen der Heizpatrone (1) zugeordneten bogenförmigen Abschnitt (9) sowie einen dem bogenförmigen Abschnitt (9) gegenüberliegenden Bodenabschnitt (10) aufweisen, welcher wenigstens eine Durchgangsbohrung (11) für eine Spannhülse (12) aufweist, in der eine mit einem Gewinde im Festlager-Trägerabschnitt (7) in Eingriff zu bringende Schraube (13) geführt ist, 10 wobei der Bodenabschnitt (10) der Festlager-Haltelasche (8) mittels wenigstens einer Feder (14) gegen den Festlager-Trägerabschnitt (7) vorgespannt ist.

4. Bremswiderstand nach einem der Ansprüche 1 oder 3, **dadurch gekennzeichnet, dass** die Auflager-Trägerabschnitte (6) senkrecht zu den Heizpatronen (1) und den Festlager-Trägerabschnitten (7) angeordnet sind.

5. Bremswiderstand nach Anspruch 4, **dadurch gekennzeichnet, dass** zwei Auflager-Trägerabschnitte (6) vorgesehen sind, die jeweils stirnseitig der Festlager-Trägerabschnitte (7) angeordnet sind.

6. Bremswiderstand nach einem der Ansprüche 1 bis 65, **dadurch gekennzeichnet, dass** der Festlager-Träger (16) in einen zentralen Aufnahmeraum (19) des Auflager-Trägers (17) eingesetzt und mit diesem 30 verspannt ist.

7. Bremswiderstand nach einem der Ansprüche 1 bis 6, **dadurch gekennzeichnet, dass** die Festlager jeweils Dämmplatten aufweisen, die zwischen dem Festlager-Trägerabschnitt (7) und der Heizpatrone (1) angeordnet sind.

8. Fahrzeug mit einer elektrodynamischen Bremseinrichtung und einem Bremswiderstand nach einem der Ansprüche 1 bis 7.

9. Fahrzeug nach Anspruch 8, ausgebildet als Schienenfahrzeug.

## Claims

1. Braking resistor for a vehicle which is equipped with an electrodynamic braking device, the braking resistor having a plurality of elongate, cylindrical heating cartridges (1) which are parallel to one another and are supported on at least two support carrier portions (6) of a support carrier (17), the heating cartridges (1) being held by means of a bearing arrangement which comprises locating bearings which preload the heating cartridges (1) in the direction of the support carrier portions (6), **characterized in that** the locating bearings each have a locating bearing carrier portion (7), running along one of the heating cartridges (1), of a locating bearing support (16) and a locating bearing retaining bracket (8) which is fastened elastically against the locating bearing carrier portion (7).

2. Braking resistor according to Claim 1, **characterized in that** the heating cartridges (1) have an outer metal jacket (3) which is filled with a compressed ceramic powder (4) and a heating wire (5) which runs along the associated heating cartridge (1) within the ceramic powder (4), electrical connectors (2) for the heating wire (5) being attached in each case at ends of the heating cartridges (1).

3. Braking resistor according to Claim 1, **characterized in that** the locating bearing retaining brackets (8) each have an arcuate portion (9) assigned to the heating cartridge (1) and a bottom portion (10) which lies opposite the arcuate portion (9) and has at least one through bore (11) for a clamping sleeve (12), in which a screw (13) is guided which is to be brought into engagement with a thread in the locating bearing carrier portion (7), the bottom portion (10) of the locating bearing retaining bracket (8) being preloaded against the locating bearing carrier portion (7) by means of at least one spring (14).

4. Braking resistor according to either of Claims 1 or 3, **characterized in that** the support carrier portions (6) are arranged perpendicularly with respect to the heating cartridges (1) and the locating bearing carrier portions (7).

5. Braking resistor according to Claim 4, **characterized in that** two support carrier portions (6) are provided which are each arranged on the end side of the locating bearing carrier portions (7).

6. Braking resistor according to one of Claims 1 to 5, **characterized in that** the locating bearing support (16) is inserted into a central receiving space (19) of the support carrier (17) and is braced to the latter.

7. Braking resistor according to one of Claims 1 to 6, **characterized in that** the locating bearings each have insulating plates which are arranged between the locating bearing carrier portion (7) and the heating cartridge (1).

8. Vehicle with an electrodynamic braking device and a braking resistor according to one of Claims 1 to 7.

9. Vehicle according to Claim 8, configured as a rail vehicle.

## Revendications

1. Résistance de freinage pour un véhicule équipé d'un dispositif de freinage électrodynamique, dans lequel la résistance de freinage comporte une pluralité de cartouches (1) chauffantes oblongues, de forme cylindrique et supportées parallèlement les unes par rapport aux autres sur au moins deux parties (6) de support d'appui mobile d'un support (17) d'appui mobile, les cartouches (1) chauffantes étant maintenues au moyen d'un dispositif d'appui, qui comporte des appuis fixes, qui précontraignent les cartouches (1) chauffantes en direction des parties (6) de support d'appui mobile, **caractérisée en ce que** les appuis fixes comportent chacun une partie (7) de support d'appui fixe, qui s'étend le long de l'une des cartouches (1) chauffantes, d'un support (16) d'appui fixe et une attache (8) d'appui fixe, qui est fixée de manière élastique contre la partie (7) de support d'appui fixe.

2. Résistance de freinage suivant la revendication 1, **caractérisée en ce que** les cartouches (1) chauffantes comportent une enveloppe (3) métallique extérieure qui est remplie d'une poudre (4) céramique compactée et d'un fil (5) chauffant s'étendant à l'intérieur de la poudre (4) céramique le long de la cartouche (1) chauffante associée, des connexions (2) électriques pour le fil (5) chauffant étant respectivement disposées aux extrémités des cartouches (1) chauffantes.

3. Résistance de freinage suivant la revendication 1, **caractérisée en ce que** les attaches (8) d'appui fixe comportent chacune une partie (9) en forme d'arc associée à la cartouche (1) chauffante ainsi qu'une partie (10) de fond opposée à la partie (9) en forme d'arc, qui comporte au moins un trou (11) de passage pour une douille (12) de serrage, dans laquelle est guidée une vis (13) à mettre en prise avec un filetage dans la partie (7) de support d'appui fixe, la partie (10) de fond de l'attache (8) d'appui fixe étant précontrainte contre la partie (7) de support d'appui fixe au moyen d'au moins un ressort (14).

4. Résistance de freinage suivant l'une des revendications 1 ou 3, **caractérisée en ce que** les parties (6) de support d'appui mobile sont disposées perpendiculairement aux cartouches (1) chauffantes et aux parties (7) de support d'appui fixe.

5. Résistance de freinage suivant la revendication 4, **caractérisée en ce que** deux parties (6) de support d'appui mobile sont disposées respectivement du côté frontal des parties (7) de support d'appui fixe.

6. Résistance de freinage suivant l'une des revendications 1 à 5, **caractérisée en ce que** le support (16) d'appui fixe est inséré dans un logement (19) central du support (17) d'appui mobile et est serré par celui-ci.

7. Résistance de freinage suivant l'une des revendications 1 à 6, **caractérisée en ce que** les appuis fixes comportent chacun des panneaux d'isolation disposés entre la partie (7) de support d'appui fixe et la cartouche (1) chauffante.

8. Véhicule ayant un dispositif de freinage électrodynamique et une résistance de freinage suivant l'une des revendications 1 à 7.

9. Véhicule suivant la revendication 8, constitué en un véhicule ferroviaire.
